# FASCICULE DE BREVET EUROPEEN

(11) **EP 2 935 099 B1**
(45) Date de publication et mention de la délivrance du brevet: **31.05.2017**
(21) Numéro de dépôt: 13814946.3
(22) Date de dépôt: 20.12.2013
(51) Int. Cl.: C01B 32/956, B82Y 40/00, G01N 15/02, G01N 15/00

(54) **PROCÉDÉ POUR LE CONTRÔLE DE LA PRODUCTION DE NANOPOUDRE DE DIAMÈTRE DONNÉ À PARTIR D'AU MOINS D'ACÉTYLÈNE CONTENU DANS UNE BOUTEILLE PRESSURISÉE**
VERFAHREN ZUR STEUERUNG DER HERSTELLUNG EINES NANOPULVERS MIT BESTIMMTEM DURCHMESSER AUS MINDESTENS EINEM ACETYLEN IN EINER DRUCKBELASTETEN WALZE
METHOD FOR CONTROLLING THE PRODUCTION OF NANOPOWDER OF A GIVEN DIAMETER FROM AT LEAST ACETYLENE CONTAINED IN A PRESSURISED CYLINDER

(30) Priorité: 21.12.2012 FR 1262720
(43) Date de publication de la demande: 28.10.2015
(73) Titulaire: Commissariat à l'Énergie Atomique et aux Énergies Alternatives, 75015 Paris (FR)
(72) Inventeur: MASKROT, Hicham, F-91310 Montlhéry (FR); GUIZARD, Benoît, FR-91400 Saclay (FR); ATMAN, Youssef, F-75013 Paris (FR)
(74) Mandataire: Regimbeau
(86) Numéro de dépôt international: PCT/EP2013/077723
(87) Numéro de publication internationale: WO 2014/096371

(56) Documents cités:
- US-A1- 2010 024 719
- KAVECKY S ET AL: "Silicon carbide powder synthesis by chemical vapour deposition from silane/acetylene reaction system", JOURNAL OF THE EUROPEAN CERAMIC SOCIETY, ELSEVIER SCIENCE PUBLISHERS, BARKING, ESSEX, GB, vol. 20, no. 12, 1 novembre 2000 (2000-11-01), pages 1939-1946, XP004216150, ISSN: 0955-2219, DOI: 10.1016/S0955-2219(00)00071-6

## Description

### Domaine technique

Il est question ici du domaine technique de la fabrication de nanopoudre technique. Plus particulièrement, il est question du domaine technique des procédés pour le contrôle de la production de nanopoudre technique à partir d'acétylène.

### État de la technique

Lors de la fabrication de nanopoudre technique, il est important de contrôler les paramètres de production afin d'obtenir une nanopoudre présentant des propriétés physiques constantes. La constance des propriétés physiques de la nanopoudre est un gage de qualité de celle-ci. Ainsi, il est important de pouvoir contrôler la production de la nanopoudre technique.

Ce contrôle de la production de nanopoudre technique peut passer par le prélèvement d'un échantillon de nanopoudre technique et de soumettre cet échantillon à des tests et/ou à des mesures.

Par exemple, il est connu de contrôler la taille des grains de nanopoudre technique à partir par exemple d'une mesure de surface spécifique et une mesure de la densité de la nanopoudre. Ces mesures permettent d'estimer la taille moyenne élémentaire des grains. D'autres analyses chimiques peuvent être réalisées.

Cependant, ces mesures et ses analyses chimiques sont réalisées après la production de nanopoudre technique. Par conséquent, la conformité d'un lot de nanopoudre technique ne peut être confirmée que plusieurs jours après sa mise en production.

Différentes techniques permettent d'effectuer un contrôle en ligne, c'est-à-dire le long de la chaîne de production, par exemple la spectrométrie sur plasma induit par laser, plus communément connues sous l'acronyme LIBS pour « laser-induced breakdown spectroscopy » en anglais, ou la diffusion de la lumière laser multiangle, plus communément connues sous l'acronyme MALLS pour « multiangle light scattering » en anglais.

L'analyse LIBS (« *laser-induced breakdown spectroscopy* » en anglais) consiste à focaliser un laser impulsionnel dans le milieu et à former un plasma dont on fait la spectrométrie d'émission. Ceci permet de déterminer la composition du milieu.

L'analyse par MALLS permet la mesure de la dimension fractale par l'exploitation des techniques de diffusion de la lumière appliquées à la mesure fractale. Le principe d'un tel système consiste à mesurer la lumière diffusée par les agrégats suivant différents angles autour de la cuve d'analyse.

Cependant, ces méthodes ne permettent de déterminer qualitativement et quantitativement qu'une seule caractéristique de la poudre à la fois : la composition chimique avec la LIBS ou la taille des grains de nanopoudre avec la MALLS. Or, la qualité de la nanopoudre dépend de plusieurs caractéristiques telles que des rapports de composition chimique, la taille des grains de nanopoudre, la granulométrie et la compacité.

Une méthode pour le contrôle de la production de nanopoudre prenant en compte plusieurs caractéristiques de celles-ci demeure donc nécessaire afin d'améliorer la qualité de la nanopoudre produite.

Le document KAVECKY et al. intitulé "Silicon carbide powder synthesis by chemical vapour déposition from silane/acetylene reaction system", in JOURNAL OF THE EUROPEAN CERAMIC SOCIETY, ELSEVIER SCIENCE PUBLISHERS, BARKING, ESSEX, GB, vol. 20, no. 12, 1 novembre 2000 (2000-11-01), pages 1939-1946- ISSN: 0955-2219, divulgue la synthèse de nanopoudres de carbures de silicium par CVD.

Le document US 2010/024719 divulgue la synthèse de couches de carbures de silicium par CVD ainsi qu'un procédé in-situ pour le contrôle du rapport stoechiométrique C/Si.

### Présentation

Un objectif est donc de pallier au moins un des inconvénients de la technique antérieure présentée ci-dessus.

Pour cela, il est question ici d'un procédé pour le contrôle de la production de nanopoudre comprenant du carbone de diamètre donné à partir d'au moins d'acétylène contenu dans une bouteille pressurisée, comprenant la détermination de la couleur de la nanopoudre et le réglage du débit de sortie de la bouteille pressurisée d'acétylène en fonction de la couleur de la nanopoudre.

L'originalité du procédé tient en ce que la colorimétrie est couplée au réglage du débit d'acétylène. En effet, la couleur de la nanopoudre depend d'un ensemble de caractéristiques intrinsèques de la nanopoudre telles que des rapports de composition chimique, la taille des grains de nanopoudre, la granulométrie et la compacité. Ainsi, la mesure de la couleur permet d'avoir accès à une sorte de synthèse de ces caractéristiques.

Par ailleurs, les inventeurs ont été surpris par le fait que la couleur de la nanopoudre produite à partir d'acétylène dépendait aussi du débit de ce composé à la sortie de la bouteille pressurisée.

Grâce à ce contrôle colorimétrique et au réglage du débit d'acétylène, une nanopoudre présentant non seulement des propriétés physico-chimiques constantes, propriétés mesurées par analyses physico-chimiques, par exemple la spectroscopie d'émission atomique source plasma à couplage inductif (ICP-AES pour « Inductive Plasma Coupling-Atomic Emission Spectroscopy » en anglais), la spectroscopie à décharge luminescente (SDL), et la spectroscopie massique par décharge luminescente (GDMS pour « Glow Discharge Mass Spectroscopy » en anglais), mais également une couleur et une dissolution dans l'eau constantes.

### Dessins

D'autres objectifs, caractéristiques et avantages apparaîtront à la lecture de la description qui suit en référence aux dessins donnés à titre illustratif et non limitatif, parmi lesquels :
- la figure 1 est un diagramme représentant les différentes étapes d'un procédé pour le contrôle de la production de nanopoudre ;
- la figure 2 est un diagramme représentant les différentes étapes d'un procédé pour la fabrication de nanopoudre ;
- la figure 3 est un graphe montrant l'intensité de la composante rouge en fonction de la taille moyenne des grains d'une nanopoudre de carbure de silicium ; et
- la figure 4 est un graphe montrant l'intensité de la composante verte en fonction de la taille moyenne des grains d'une nanopoudre de carbure de silicium ;
- la figure 5 est un graphe montrant la variation de la composante rouge en fonction du nombre de synthèse effectuée avec la même bouteille pressurisée d'acétylène, tous paramètres égaux par ailleurs.

### Description

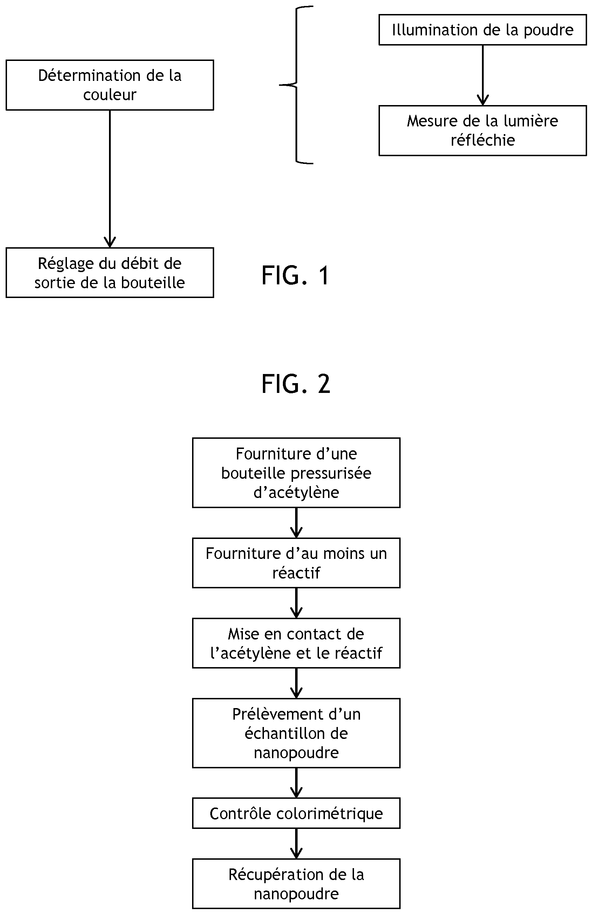

Un procédé pour le contrôle de la production de nanopoudre de diamètre donné à partir d'au moins d'acétylène contenu dans une bouteille pressurisée est décrit ci-après en référence à la figure 1.

Ce procédé comprend la détermination de la couleur de la nanopoudre et le réglage du débit de sortie de la bouteille pressurisée d'acétylène en fonction de la couleur de la poudre.

Par « nanopoudre », il est compris ici un ensemble de particules ou grains dont la taille est de l'ordre du nanomètre, c'est-à-dire entre environ 1 nm et environ 100 nm. La taille des grains est de préférence comprise dans un intervalle pour lequel la couleur de la nanopoudre varie au plus de 5 %, encore de préférence 3 %, alors que la taille varie au moins de plus de 22 %, encore de préférence de 25 %, toujours de préférence de 42 %. La variation de la taille étant calculée de la manière suivante : si Xₘᵢₙ et Xₘₐₓ sont respectivement la taille minimale et la taille maximale de cet intervalle, la variation de la taille égale à (Xₘₐₓ - Xₘᵢₙ)/(Xₘₐₓ + Xₘᵢₙ). La variation de la couleur est calculée de la manière suivante : si Rₘᵢₙ et Rₘₐₓ sont respectivement la valeur minimale et la valeur maximale de la couleur dans cette intervalle, la variation de la couleur est égale à (Rₘₐₓ - Rₘᵢₙ)/(Rₘₐₓ + Rₘᵢₙ).

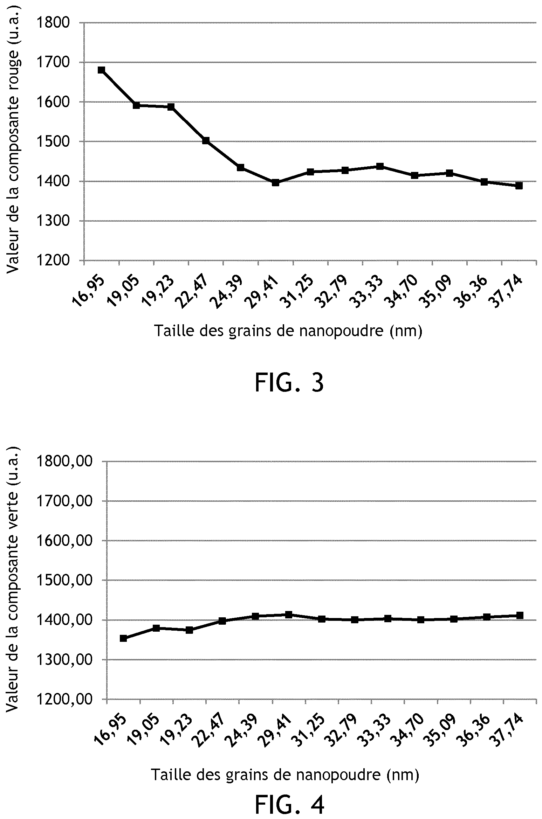

Par exemple, pour une nanopoudre de carbure de silicium, ces conditions sont respectées lorsque la taille des grains est de préférence comprise entre environ 20 nm et environ 50 nm, encore de préférence entre environ 24 nm et environ 40 nm, toujours de préférence entre environ 24 nm et environ 38 nm (voir les figures 3 et 4 et le tableau 1 ci-dessous).

**Tableau 1**

| Taille moyenne des grains (nm) | Valeur de la composante rouge (u.a.) | Valeur de la composante verte (u.a.) |
|---|---|---|
| 16,95 | 1680 | 1353 |
| 19,05 | 1591 | 1379 |
| 19,23 | 1587 | 1374 |
| 22,47 | 1502 | 1397 |
| 24,39 | 1434 | 1409 |
| 29,41 | 1396 | 1413 |
| 31,25 | 1423 | 1402 |
| 32,79 | 1427 | 1400 |
| 33,33 | 1437 | 1403 |
| 34,70 | 1414 | 1400 |
| 35,09 | 1420 | 1402 |
| 36,36 | 1398 | 1407 |
| 37,74 | 1388 | 1411 |

Le procédé peut éventuellement comprendre la mesure de la taille du diamètre des grains de nanopoudre. Ainsi, la mesure de la taille du diamètre des grains de nanopoudre permettrait d'obtenir un procédé de contrôle plus stricte afin d'obtenir une nanopoudre de qualité encore supérieure. Cependant, cette étape n'est pas toujours nécessaire car la qualité de la nanopoudre obtenue autrement est déjà suffisante pour nombres d'application.

De préférence, la nanopoudre est une nanopoudre de carbure de silicium. Le carbure de silicium est généralement obtenu à partir d'acétylène et de silane SiH₄ suivant la réaction :

2·SiH₄ + C₂H₂ → 2·SiC + 5·H₂.

Par « couleur » il est fait référence aux ondes électromagnétiques que réfléchit la nanopoudre. Les ondes électromagnétiques prises en compte sont celles de la lumière visible, c'est-à-dire celles dont la longueur d'onde est comprise entre environ 380 nm et environ 750 nm. On désigne par le terme de couleur soit les ondes électromagnétiques à une longueur d'onde donnée ou à un intervalle de longueurs d'onde donné. Par « couleur », il est également fait référence aux méthodes de décomposition de la lumière permettant un traitement numérique de celle-ci, c'est-à-dire aux méthodes RVB (rouge-vert-bleu aussi appelée système additif, aussi connu sous l'acronyme RGB pour « red-green-blue » en anglais), CMJ (cyan-magenta-jaune aussi appelée système soustractif, aussi connu sous l'acronyme CMY ou YMC pour « cyan-magenta-yellow », respectivement « yellow-magenta-cyan » en anglais) ou encore TSL (teinte-saturation-luminosité aussi connu sous l'acronyme HSL pour « hue-saturation-lightness » en anglais). Ainsi, par « couleur », il est désigné l'une des composantes de la lumière ou une quelconque combinaison de celles-ci dans la méthode de décomposition envisagée.

De préférence, la méthode de décomposition est la méthode RVB. Dans cette méthode, la lumière réfléchie est captée et décomposée en trois composantes : (rouge, vert, bleu). Ces trois couleurs correspondent à peu près aux trois longueurs d'onde auxquelles sont sensibles les trois types de cônes de l'oeil humain. L'addition des trois donne du blanc pour l'oeil humain. Ainsi, chaque couleur visible reçoit un ensemble de coordonnées. Cependant, toutes les couleurs visibles ne peuvent être rendues en RVB et des décompositions particulières ont été élaborées pour faciliter la gestion de la couleur dans un ensemble informatique. Néanmoins, peu importe la décomposition RVB utilisée, le principe reste identique.

Encore de préférence, seules les couleurs parmi le rouge, le vert et le bleu entrant principalement dans la composition de la couleur de la nanopoudre sont utilisées. Par exemple, pour une nanopoudre de carbure de silicium SiC, seuls le rouge et le vert peuvent être pris en compte car la couleur du carbure de silicium varie du blanc au jaune (mélange de rouge et de vert dans le système additif). Toujours de préférence, seul le rouge est pris en compte pour le SiC. En effet, le rouge est la composante qui présente la variation la plus ample tout le long de la production non contrôlée de la nanopoudre.

Il est compris par le terme « débit de sortie », le débit réglé en sortie de la bouteille pressurisée, c'est-à-dire celui du détendeur entre la bouteille pressurisée et un tuyau ou conduit pour amener de l'acétylène dans un réacteur où se produit la formation de la nanopoudre.

L'acétylène, de formule chimique HC≡CH, est un gaz à température ambiante et conservé dans des bouteilles pressurisées. En fait, l'acétylène est rarement conservé seul dans ces bouteilles pressurisées, il est mélangé avec de l'acétone. En sortie de bouteille, le gaz contient de 0,1 à 2,5 % d'acétone, soit 97,5 à 99,9 % d'acétylène.

Lors de l'utilisation de la bouteille d'acétylène, à un débit de sortie donnée, la quantité d'acétylène envoyée vers le réacteur n'est donc pas constante au fil du temps. En effet, le ratio d'acétylène/acétone à l'intérieur de la bouteille pressurisée diminue avec la consommation de celle-ci de sorte qu'en début d'utilisation, la quantité d'acétylène est supérieure à celle en fin d'utilisation.

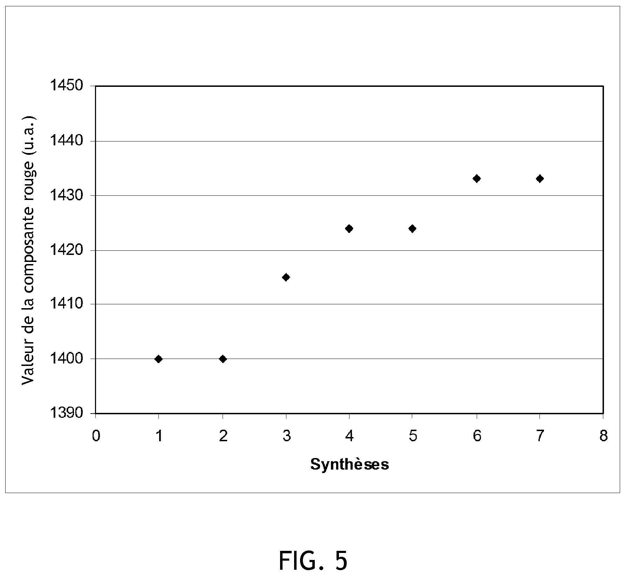

Par exemple, la figure 5 et le tableau 2 ci-dessous montre que pour différentes synthèses de nanopoudre de carbure de silicium à partir de silane et d'acétylène, dont l'acétylène provient d'une seule bouteille pressurisée, la couleur de la nanopoudre varie malgré les mêmes paramètres fixés par ailleurs tels que le débit de sortie de la bouteille, les réactifs, la puissance laser, la pression, la durée d'une synthèse, etc. Plus particulièrement, dans le tableau 2, les synthèses sont successives, le temps indique le temps des synthèses cumulées.

**Tableau 2**

| N° synthèse | Temps (min) | Composante X (u.a) |
|---|---|---|
| 1 | 120 | 1400 |
| 2 | 170 | 1425 |
| 3 | 290 | 1424 |
| 4 | 410 | 1433 |
| 5 | 515 | 1501 |

La détermination de la couleur peut être réalisée par l'illumination de la poudre avec une source de lumière suivie de la mesure de la lumière réfléchie par la poudre.

La mesure de la lumière réfléchie par la poudre peut consister en la capture par un capteur de l'intensité de la lumière réfléchie à des longueurs d'ondes correspondant au domaine du visible, de préférence à la couleur rouge (c'est-à-dire entre environ 630 nm et environ 780 nm) et verte (c'est-à-dire entre environ 492 nm et environ 575 nm), encore de préférence à la couleur rouge.

Lorsque la méthode de décomposition utilisée est le RVB, les trois couleurs peuvent être capturées et seules le rouge et éventuellement le vert utilisés.

Le réglage du débit d'acétylène peut être réalisé à l'aide d'un tableau mettant en correspondance la couleur de la poudre avec une valeur d'augmentation de débit de sortie de la bouteille pressurisée d'acétylène. Un procédé de production de nanopoudre de diamètre donné et d'une couleur donnée à partir d'au moins d'acétylène contenu dans une bouteille pressurisée est décrite ci-après en référence à la figure 2.

Ce procédé comprend les étapes suivantes :
- la fourniture d'une bouteille pressurisée d'acétylène ;
- la fourniture d'au moins un réactif apte à réagir avec l'acétylène pour produire la nanopoudre ;
- la mise en contact du réactif avec l'acétylène pour la formation de nanopoudre ;
- le prélèvement d'un échantillon de nanopoudre ;
- le contrôle colorimétrique de l'échantillon de nanopoudre grâce au procédé décrit ci-dessus ; et
- la récupération de la nanopoudre.

## Revendications

1. Procédé pour le contrôle de la production de nanopoudre comprenant du carbone de diamètre donné à partir d'au moins d'acétylène contenu dans une bouteille pressurisée, comprenant la détermination de la couleur de la nanopoudre et le réglage du débit de sortie de la bouteille pressurisée d'acétylène en fonction de la couleur de la nanopoudre.

2. Procédé selon la revendication 1, dans lequel la nanopoudre produite est une nanopoudre de carbure de silicium.

3. Procédé selon la revendication 1 ou la revendication 2, dans lequel la détermination de la couleur est réalisée par :
- l'illumination de la nanopoudre avec une source de lumière ; et
- la mesure de la lumière réfléchie par la nanopoudre.

4. Procédé selon la revendication 3, dans lequel la mesure de la lumière réfléchie par la nanopoudre consiste en la capture de l'intensité de la lumière réfléchie à des longueurs d'onde correspondant à la couleur rouge.

5. Procédé selon la revendication 4, dans lequel les longueurs d'onde correspondant à la couleur rouge sont comprises dans un intervalle de 630 nm à 780 nm.

6. Procédé selon l'une des revendications 1 à 5, dans lequel un tableau de correspondance entre la couleur de la nanopoudre et le débit d'acétylène est utilisé pour le réglage du débit d'acétylène..

7. Procédé selon l'une des revendications 1 à 6, comprenant en outre la mesure de la taille du diamètre des grains de nanopoudre.

8. Procédé de production de nanopoudre de diamètre donné et d'une couleur donnée à partir d'au moins d'acétylène contenu dans une bouteille pressurisée, comprenant :
- la fourniture d'une bouteille pressurisée d'acétylène ;
- la fourniture d'au moins un réactif apte à réagir avec l'acétylène pour produire la nanopoudre ;
- la mise en contact du réactif avec l'acétylène pour la formation de nanopoudre ;
- le prélèvement d'un échantillon de nanopoudre ;
- le contrôle colorimétrique de l'échantillon de nanopoudre grâce au procédé selon l'une des revendications 1 à 7 ; et
- la récupération de la nanopoudre.

## Patentansprüche

1. Verfahren zum Kontrollieren der Herstellung von Nanopulver, das Kohlenstoff eines bestimmten Durchmessers umfasst, aus mindestens Acetylen, das in einer Druckflasche enthalten ist, umfassend das Bestimmen der Farbe des Nanopulvers und das Regeln des Ausgangsdurchflusses der Acetylen-Druckflasche abhängig von der Farbe des Nanopulvers.

2. Verfahren nach Anspruch 1, wobei es sich bei dem hergestellten Nanopulver um ein Siliciumcarbid-Nanopulver handelt.

3. Verfahren nach Anspruch 1 oder Anspruch 2, wobei das Bestimmen der Farbe erfolgt durch:
- das Beleuchten des Nanopulvers mit einer Lichtquelle; und
- das Messen des von dem Nanopulver reflektierten Lichts.

4. Verfahren nach Anspruch 3, wobei das Messen des von dem Nanopulver reflektierten Lichts im Erfassen der Intensität des reflektierten Lichts bei Wellenlängen, die der Farbe Rot entsprechen, besteht.

5. Verfahren nach Anspruch 4, wobei die Wellenlängen, die der Farbe Rot entsprechen, in einem Bereich von 630 nm bis 780 nm liegen.

6. Verfahren nach einem der Ansprüche 1 bis 5, wobei zum Regeln des Acetylendurchflusses eine Tabelle der Entsprechung zwischen der Farbe des Nanopulvers und dem Acetylendurchfluss verwendet wird.

7. Verfahren nach einem der Ansprüche 1 bis 6, des Weiteren umfassend das Messen der Größe des Durchmessers der Nanopulverkörnchen.

8. Verfahren zur Herstellung von Nanopulver mit bestimmtem Durchmesser und einer bestimmten Farbe aus mindestens Acetylen, das in einer Druckflasche enthalten ist, umfassend:
- Bereitstellen einer Acetylen-Druckflasche;
- Bereitstellen von mindestens einem Reagenz, das mit dem Acetylen reaktionsfähig ist, um das Nanopulver herzustellen;
- Inkontaktbringen des Reagenzes mit dem Acetylen zur Bildung des Nanopulvers;
- Entnehmen einer Nanopulverprobe;
- kolorimetrisches Kontrollieren der Nanopulverprobe nach dem Verfahren nach einem der Ansprüche 1 bis 7; und
- Gewinnen des Nanopulvers.

## Claims

1. Method for controlling the production of nanopowder comprising carbon of a given diameter from at least acetylene contained in a pressurised cylinder, comprising the defining of the colour of the nanopowder and the adjusting of the rate of discharge from the pressurised cylinder of acetylene according to the colour of the nanopowder.

2. Method according to claim 1, wherein the nanopowder produced is a silicon carbide nanopowder.

3. Method according to claim 1 or claim 2, wherein the defining of the colour is carried out by:
- the illuminating of the nanopowder with a source of light; and
- the measuring of the light reflected by the nanopowder.

4. Method according to claim 3, wherein the measuring of the light reflected by the nanopowder consists in capturing the intensity of the light reflected at wavelengths that correspond to the colour red.

5. Method according to claim 4, wherein the wavelengths corresponding to the colour red are included in an interval from 630 nm to 780 nm.

6. Method according to one of claims 1 to 5, wherein a table of correspondence between the colour of the nanopowder and the rate of acetylene is used for the adjusting of the rate of acetylene.

7. Method according to one of claims 1 to 6, further comprising the measuring of the size of the diameter of the grains of nanopowder.

8. Method for the production of nanopowder of a given diameter and of a given colour from at least acetylene contained in a pressurised cylinder, comprising:
- the supplying of a pressurised cylinder of acetylene;
- the supplying of at least one reagent able to react with acetylene in order to produce the nanopowder;
- the putting into contact of the reagent with acetylene for the forming of nanopowder;
- the taking of a sample of nanopowder;
- the colorimetric inspection of the sample of nanopowder thanks to the method according to one of claims 1 to 7; and
- the recovery of the nanopowder.
